# EUROPEAN PATENT APPLICATION

(11) **EP 4 141 182 A1**
(43) Date of publication of application: **01.03.2023**
(21) Application number: 21461580.9
(22) Date of filing: 28.08.2021
(51) Int. Cl.: E04B 1/58, F16B 7/18, A47B 13/00

(54) **NODE MODULE, INTERMEDIATE MODULE, MODULE SET FOR BUILDING FRAME CONSTRUCTIONS OF ELONGATED CONSTRUCTION ELEMENTS, FRAME CONSTRUCTION, AND METHOD OF BUILDING A FRAME CONSTRUCTION**

(71) Applicant: Jakubowski, Jan, 60-319 Poznan (PL)
(72) Inventor: Jakubowski, Jan, 60-319 Poznan (PL)
(74) Representative: Bury & Bury

(57) **Abstract**

The node module **(100)** for connecting elongated structural elements **(600),** equipped with a body having at least four contact pads **(110, 120, 130, 140, 150)** for connecting elongated structural elements **(600)** according to the invention, characterized in that the body has the shape of a block, while at least four contact pads **(110, 120, 130, 140, 150)** have retaining surfaces **(112, 122, 132)** with at least partially threaded holes **(111, 121, 131, 141, 151)** and at least two contact pads **(110, 120, 130)** are substantially perpendicular to one another.

The intermediary module **(200)** for connecting structural elements with the node module has a first contact pad complementary with the contact pad of the node module.

The set for erecting structures from elongated structural elements contains at least one node module **(100),** at least one intermediary module **(200)** and at least one terminal module **(300)** .

The frame structure consists of at least three structural elements connected using an set according to the invention.

The method of erecting structures is characterized in that the elongated structural elements are joined using modules according to the invention.

## Description

### Field of the invention

Present invention concerns a node module, intermediary module set for erecting structures of elongated elements, structure made of elongated structural elements, and method of erecting structures of elongated structural elements. The invention in particular relates to temporary frame structure, advertising booths, awnings, and skeletal structures of surfaces for coverage with advertising materials, as well as simple garden architecture.

### State of the art

In the current state of the art there are known modules, methods, assemblies and structures intended for quick erection. The flaw of most of these solutions is a limitation in structural freedom and durability in exchange for ensuring quick construction. The limitation in structural freedom applies in particular adjustment of angles between elements, and admissible shapes and types of structural elements.

The American publication of the patent application no. US2012/0009013A1 discloses a junction or node module for elongated elements of frame structures, having the shape of a cuboid, on the walls equipped with openings with cross-shaped cross-sections. The elongated elements constituted profiles with terminals "press-fitted" onto their ends and fastened with screws to the inner divider of the profile - equipped with cross-shaped protrusions fitted to the node openings. These protrusions are shaped in such a way, that their insertion into the openings and turning together with the profile fixes them inside the node. Thus, the node module is able to connect a maximum of 6 elongated elements, and using several such modules and frame elements it is possible to erect structures very quickly. The node module according to US2012/0009013A1 does not provide the possibility to connect elements other than substantially perpendicularly, which limits the freedom in designing the structure, as well as its durability. The durability of the connection of elongated frame elements with the node module itself is severely limited.

The American patent no. 5,700,102 discloses a system of connecting elongated elements into frame structures. The elongated elements are equipped with terminal elements fixed to their ends, having a toothed disk mounted on the end at a set angle, within the range from 0° to 90°. The toothed disks are mounted permanently, therefore, in order to maintain freedom of erecting structures, it is necessary to ensure a set of terminal modules with different disk pitch angle values. The terminal modules can be joined with each other in an articulated connection after clamping their disks together with a bolt and nut, together with clamping elements. Thereby, it is possible to join together up to four elements. Additionally, the set provides modules fixed to a wall and node modules equipped with a disk shaped body, to which toothed thrust disks are fixed enabling the additional mounting of terminal elements. The faults of the solution according to the American patent no. 5,700,102 include a relatively low durability of connections, related to a susceptibility of disks to breakage, a significant complexity of the system which, in order to provide full freedom, must consist of many elements, and the requirement of simultaneous connection of many terminal elements using one screw connection, which translates to inconvenience in erecting the structure.

The publication of a Chinese patent application CN109024918A discloses skeletal structures consisting of profiles, a first junction, second junction, third junction, fourth junction, mounting plate, counter-pressure plate, and a connecting element. The fourth junction consists of terminal elements mounted on the ends of profiles. They are press-fitted in the profiles and have protruding contact pads. Two fourth junctions can be joined at an angle. As a result, the structures can be to a certain extent formed, assembled and disassembled according to the user's requirements, which is especially beneficial in the case of greenhouses. The solution does not allow erection of structures of such arbitrary shapes as used in advertising and in construction of trade fair booths.

### Problem solved

The technical problem to be resolved is to ensure the ability to erect skeletal structures with arbitrary shapes, which ensure mechanical durability and the ability of quick assembly.

The aim of the invention is to resolve the above issue and provide a simple system which will ensure high flexibility in structural design, convenience of structure erection, and durability of connections.

### Summary of the invention

The node module for connecting elongated structural elements, equipped with a body, having at least four contact pads for connecting elongated structural elements, according to this invention is characterized in that the body is the shape of a block, while the at least four contact pads have retaining surfaces with openings which are at least partially threaded, and at least two contact pads are substantially perpendicular to one another. Such an arrangement of contact pads ensures the possibility of connecting further elements in a manner that enables erection of frame structures with common geometries, while the utilization of retaining surfaces ensures the possibility to adjust the connection angles.

Preferably, the body has an substantially cuboidal shape, while the contact pads are placed on its walls. Such a shape makes it possible to achieve six contact pads which are either perpendicular or parallel to each other. This enables safe transfer of the structures weight between the elements.

Preferably, the retaining surface of at least one contact pad is equipped with teeth diverging radially from the opening. The use of such teeth increases the twisting resistance and introduces quantized values of possible angles of rotation in the joint.

Preferably, the retaining surface of at least one contact pad has at least 18 teeth. In general, it was concluded that the toothed surfaces having between 18 and 72 teeth are a reasonable compromise between flexibility in terms of the scope of rotation, and durability. Additionally, the resulting quantized angle of rotation values speed up the process of erecting the structure, as they limit the number of necessary fitting attempts when determining the correct connection angle.

Alternatively, the retaining surface of at least one contact pad has at least 72 teeth. Such a solution ensures greater connection flexibility, with the quantum of angle adjustment equal to 5° or less.

Preferably, at least one corner of the substantially cuboid-shaped body has a corner opening with a section equipped with an internal thread.

Preferably, at least one opening in the contact pad has a threaded interior. Alternatively, it is possible to utilize through holes and fastening with screws from the exterior, respectively pressing together using clamping quick couplings - constructions used for fastening bicycle wheels.

Preferably, the contact pad has a protractor scale, which facilitates determination of the value of the element connection angle - particularly in situations where the retaining surfaces are not toothed or have more than 72 teeth.

The intermediary module for connecting structural elements with the node module having at least the first contact pad equipped with a retaining surface with a hole, and second contact pad equipped with a retaining surface with a hole, in accordance with the presented invention is characterized in that it additionally has a third contact pad equipped with a retaining surface with a hole, whereby the second and third contact pads are substantially parallel to each other, so that the holes are substantially coaxial, while their retaining surfaces are oriented in opposite directions. The first contact pad is substantially perpendicular to the second and third contact pad and has a retaining surface oriented towards the second and third retaining surface. The hole in the first retaining surface leads between the second and third retaining field, through the entire intermediary module. This solution makes it possible to provide a compact and durable module, which can be fastened onto the node module and ensure additional freedom in the element rotation range.

The set for erecting structures of elongated elements in accordance with the invention is characterized in that it contains at least one node module according to the invention, at least two intermediary modules according to the invention, having a first contact pad complementary to the contact pad of the node module, and at least three terminal modules adapted to mounting on elongated structural elements and equipped with a contact pad complementary to the second and third contact pad of the intermediary module.

Preferably, the set further encompasses a foot module adapted to fixing onto flat surfaces and equipped with a contact pad complementary to the node module's contact pad.

A frame structure of at least three elongated structural elements according to the invention is characterized in that at least three structural elements are equipped at least on one end with terminal modules connected to the intermediary modules according to the invention. At least two intermediary modules are connected to at least one node module according to the invention.

Preferably, the frame structure further has a foot module which supports the node module.

The method of erecting the frame structures consisting of elongated structural elements, where the elongated structural elements are provided with terminal elements equipped with contact pads, which connect to the node module, according to the invention, is characterized in that the node module constitutes a node module according to the invention, while the terminal module and node module connection is executed using an intermediary module according to the invention, equipped with the first contact pad complementary with the contact pads of the node module, and a second and third contact pad complementary with the contact pad of the terminal module.

The invention ensures the possibility of quick and convenient erection of arbitrarily shaped frame structures, while simultaneously ensuring connection security and durability.

### Description of figures on the drawing

The embodiments of the invention have been described below in greater detail with reference to attached drawings in which:
- Fig. 1a: shows a perspective view of an embodiment of the node module;
- Fig. 1b: shows that node module in a cross-section view;
- Fig. 1c: shows that node module in a side view on the contact pad 100;
- Fig. 2a: shows a perspective view, diagonally from the bottom, an example embodiment of the intermediary module;
- Fig. 2b: shows that intermediary module in a perspective view, diagonally from the top;
- Fig. 2c: shows that intermediary module in a vertical cross-section view;
- Fig. 2d: shows that intermediary module in a frontal view;
- Fig. 2e: shows that intermediary module in a side view;
- Fig. 2f: shows that intermediary module in a bottom-up view;
- Fig. 2g: shows that intermediary module in a top-down view;
- Fig. 3a: shows a diagonal perspective bottom view of an example embodiment of the terminal module;
- Fig. 3b: shows that terminal module in a diagonal perspective view from the top;
- Fig. 3c: shows that terminal module in a view from the back;
- Fig. 3d: shows that terminal module in a frontal view;
- Fig. 3e: shows that terminal module in a side view;
- Fig. 3f: shows that terminal module in a bottom-up view ;
- Fig. 4a: shows a diagonal perspective bottom view of an example embodiment of the foot module;
- Fig. 4b: shows that foot module in a diagonal perspective view from the top;
- Fig. 4c: shows that foot module in a side view;
- Fig. 4d: shows that foot module in a bottom-up view;
- Fig. 4e: shows that foot module in a top-down view;
- Fig. 5a: shows a perspective view of the combined foot module, node module, intermediary module, and terminal module the terminal module;
- Fig. 6a: shows a perspective view of an executed structure according to the invention in the form of a gazebo frame;
- Fig. 6b: shows a magnified perspective view of a fragment of this structure;
- Fig. 7a: shows a perspective view of an executed structure according to the invention in the form of an exhibition booth frame;
- Fig. 7b: shows a magnified view of a fragment of this structure;
- Fig. 8a: shows a perspective view of an executed structure according to the invention in the form of a table;
- Fig. 8b: shows a magnified view of a fragment of this structure;
- Fig. 9a: shows a perspective view of an executed structure according to the invention in the form of a chair;
- Fig. 9b: shows a magnified view of a fragment of this structure.

### Description of embodiments

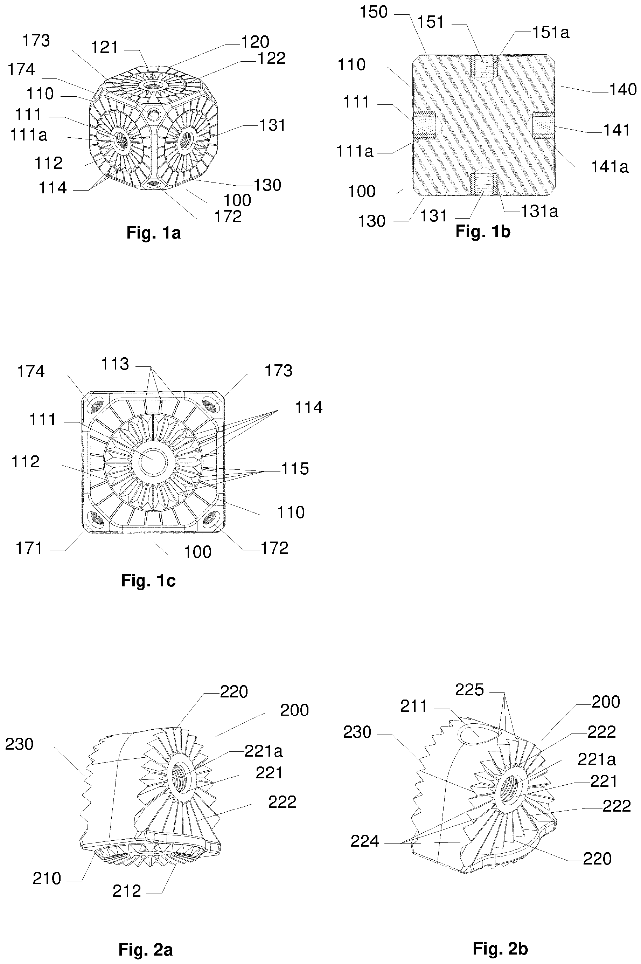

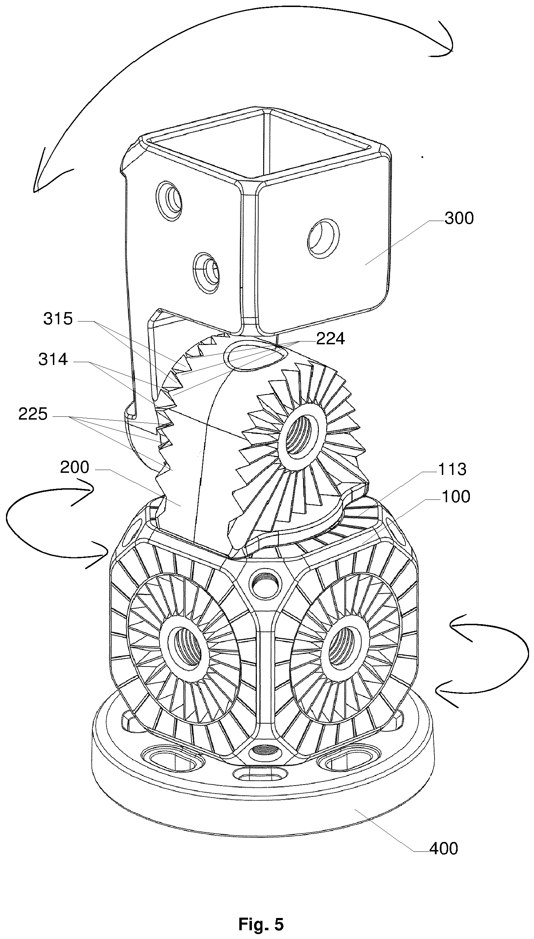

An example embodiment of the node module **100** is shown in Fig. 1a Fig. 1b and Fig. 1c, as well as in an set in Fig. 5, and as part of structures presented in further figures. The node module **100** serves to join a larger number of elongated structural elements **600**, equipped with terminal modules **300** with which the node module **100** connects using intermediary elements. In this embodiment, the node module **100** is equipped with a body in the shape of a cuboidal block with truncated corners, with six contact pads **110**, **120**, **130**, one on each of the walls. It is also possible to utilize other polyhedrons, as well as solids in which only certain walls have contact pads, in tests, however, a cuboid with identical contact pads on all walls proved the most convenient and easy to execute. The contact pads on walls with shared edges are substantially perpendicular to each other.

The contact pads **110**, **120**, **130**, **140**, **150** have retaining surfaces **112**, **122**, **132** with holes **111**, **121**, **131**, **141**, **151**. The contact pads are substantially perpendicular to each other. The holes are parallel to one another in pairs and have threaded sections **111a**, **121a**, **131a**, **141a**, **151a** executed in the form of metal, particularly steel, elements embedded in the body of the node module **100**. As a result, it is possible to connect the contact pads **110**, **120**, **130** of the node module **100** using the complementary connection of the first contact pad **210** of the intermediary element **200**. Squeezing together of contact pads **110**, **120**, **130** of the node module having retaining surfaces **112**, **122**, **132** with the first contact pad **210** of the intermediary element **200** having a retaining surface **212**, using a screwed connection, ensures the ability to adjust the rotation with the screw loosened, and lock the rotation by tightening said screw. In the structures visualized in the figure, these screws are not shown. Analogously, the node module **100** connects with the foot module **400**. The holes of contact pads do not need to be threaded. It is possible to use through holes and screw them together through the entire thickness of the node module **100**. The body is made from a high durability plastic material, e.g. Biresin VB280, or aluminum. Aluminum is particularly preferable due to its weight and durability values, and the ability to work with other metals. With aluminum elements it is possible to utilize metal elements in the holes - inserts which are press-fitted or fixed by single time screwing together.

Using regular friction surfaces as the retaining surfaces enables fluid angle adjustment. For convenience it is possible to provide a protractor scale **113**. Friction surfaces provide only limited rotational load strength.

Additional structural durability, as well as possibility to quantize the angle adjustment can be achieved by using surfaces with teeth **114**, notches between teeth **115** and the contact pad **110** of the module **100**, and the complementary contact pad **210** of the intermediary module **200** with teeth **215** adapted to the notches **115** and having notches between the teeth **214** of the intermediary module **200** adapted to the teeth **114** of the node module **100**. The teeth diverge radially from the hole provided in the contact pad.

Even the use of 6 teeth provides a possibility of adjustment ensuring relatively high freedom in erecting skeletal structures. Better performance is achieved in constructions with 18 teeth. The maximum tested adjustment accuracy was 1°, with a retaining surface having 360 teeth. A reasonable compromise between adjustment flexibility and durability were surfaces ranging from 24 to 72 teeth. A number of teeth divisible by 4 ensures symmetry of adjustment. Additionally, it was found that the adjustment by 5° provided by 72 teeth enables easy erection of structures with set angles without additional measurements. Personnel after short-term training, having at their disposal an adjustment accuracy up to 5°, was able to quickly carry out connections of elements at identical angles by fitting the elements to one another without additional measurements.

Additional possibilities of erecting structures were obtained by providing threaded corner holes **171**, **172**, **173**, **174** in the truncated corners of the body of the node module **100.** When erecting structures, these holes are used to screw in hooks or loops for mounting guy wires. The corner holes do not need to be threaded and can have other applications, in particular, one of them may be provided with a plug enabling power supply to the module, if it is supposed to have an additional lighting point or power supply source.

In this embodiment, identical contact pads are provided on all walls of the cuboidal body of the node module. The drawing visualizes only three walls in detail. The other two also provide contact pads, however, they are only marked on the sectional drawing shown in Fig. 1b. The sixth contact pad was not shown in the drawing.

The node module can be useful with just four contact pads. In this case the other walls may be left empty or used, e.g. as a lighting point - particularly LED - or to provide a socket for connecting electrically powered devices. This may be a USB port.

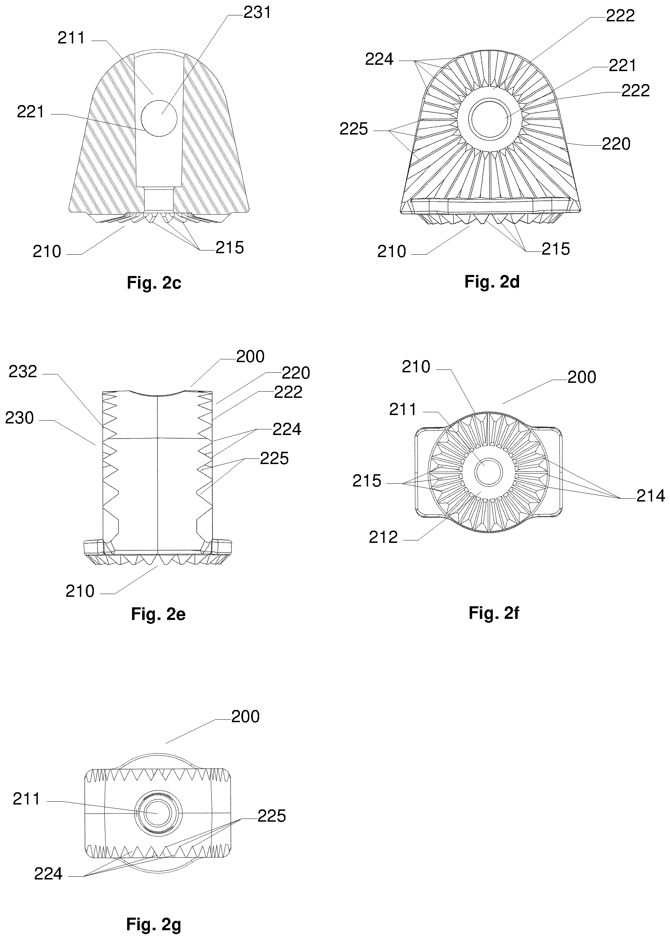

The intermediary module **200** for connecting structural elements with the node module **100** is shown in Fig. 2a-g and Fig. 5 in an set, as well as in example structures shown in further figures. The intermediary module **200** is equipped with the first contact pad **210** with a retaining surface **212** with an opening **211** adapted to connect with the contact pads of the node module. The intermediary module further has a second contact pad **220** equipped with a retaining surface **222** with a hole **221**, and a third contact pad **230.** The second **220** and third **230** contact pad are substantially parallel to one another, so that the holes **221** and **231** are substantially coaxial and together constitute a through hole. The retaining surfaces **222** and **232** are oriented in opposite directions. The first contact pad **210** is substantially perpendicular to the second **220** and third **230** contact pad, and has a retaining surface **212** oriented away from the second and third retaining surface. The hole **211** of the first retaining surface **210** runs between the second and third retaining surface, through the entire intermediary module **200.**

The first contact pad **210** is adapted to connect with the contact pads **110, 120** and **130** of the node module. The hole **211** by contact pad **210** has a smaller diameter than in the upper (in relation to the orientation on the drawing) part of the intermediary module **200.** As a result, the connection with the node module may be performed by inserting a screw into the hole **210** from the top, so that its head fits inside the intermediary module **200,** while the thread is screwed into the hole **111, 121** and **131** of the contact pad **110**, **120** and **130**, and tightened from the top.

The first contact pad **210** has a retaining surface **212** equipped with teeth **215** and notches between the teeth **214** complementary with the retaining surface **112, 122, 132** of the node module **100.**

The second contact pad **220** and third contact pad **230** are adapted for connection using the retaining surfaces **222**, **232** to the contact pad **310** of the terminal element **300**. Similarly as in the case of the node module **100,** it is possible to use typical friction surfaces or toothed retaining surfaces. The former ensure fluid adjustment, while the latter - a more durable connection and quantized element pitch angle values, which increases the repeatability of structural connections. Effective tests were conducted for solutions from 6 to 360 teeth, however, the best performance was noted in solutions with a number of teeth divisible by 4 and within a range between 24 and 72.

The holes **221**, **231** in the second **220** and third contact pad **230** may be threaded or have threaded sections. This example uses the latter solution, ensuring threaded sections with threaded metal elements embedded in the material of the intermediary module **200**.

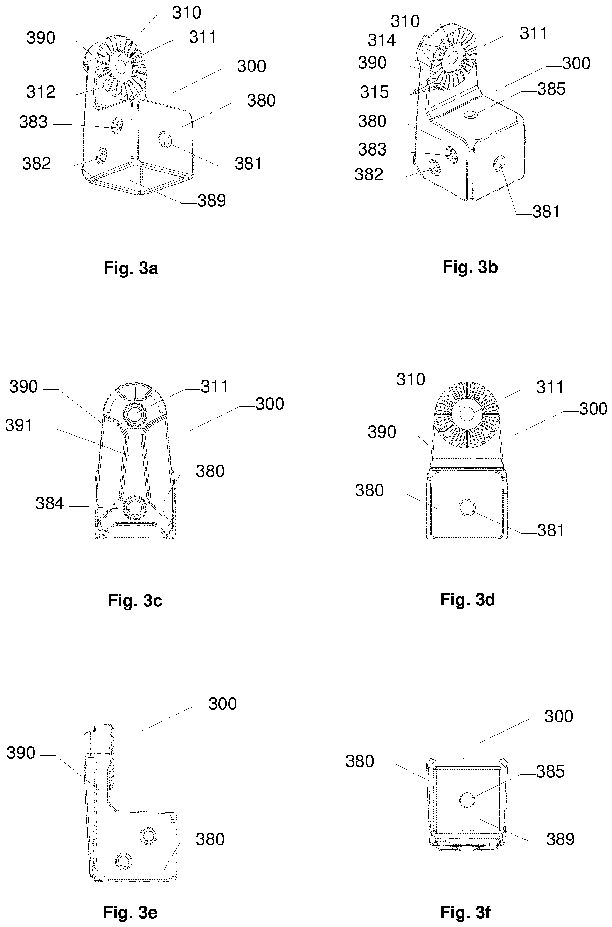

The terminal module **300**, adapted for mounting on elongated structural elements **600** and their connection with the intermediary module **200,** an through it, with the node module **100**, is shown in Fig. 3a-f. The terminal module **300** consists of a body open from the bottom **380**, adapted for fitting the end of an elongated structural element in the open space **389**, and fixing means which constitute holes in the body **380** adapted for accommodating screws. At the top, the cuboidal body **380** transitions into a connector **390**, which constitutes an extension of one of the walls of the body **380** and is equipped with a contact pad **310** having a retaining surface **312** with a hole **311**, complementary with the second and third contact pads **220, 230** of the intermediary module **200**. In this embodiment example, the retaining surface **312** of the contact pad **310** is toothed in order to fit with the retaining surfaces **222**, **232** of the contact pads of the intermediary element **200**. The teeth **315** of the retaining surface **310** are adapted to the notches **225** of the retaining surface **220** of the intermediary module, while the notches between the teeth **314** are adapted to the teeth **224** of the retaining surface **220** on the intermediary module.

The terminal module is adapted for connection to various elongated structural elements **600**. Typically, these are hollow aluminum profiles, however, they can also be wooden elements. When using wooden elements, the invention utilizes connections with longer screws leading through the holes **382**, **383**, **381**, and through the elongated structural element fitted inside the space **389**. The holes are placed alternately, so that the screws do not collide with each other, even if screws with lengths corresponding to the internal dimensions of the space **389** are used. Additional durability improvement is achieved by utilizing ribbing **391** running through the body **380** and connector **390**, and encompassing the holes **311**, **384**.

In the case of using structural elements such as steel beams or aluminum profiles, it is possible to use a shorter screw inserted through the hole **385** into the complementary opening in the elongated structural element, or one through-bolt, through the coaxial holes **381**, **384**. In this configuration, the hole **385** can be used to conduct electrical wires for lighting the structure or providing power supply outlets.

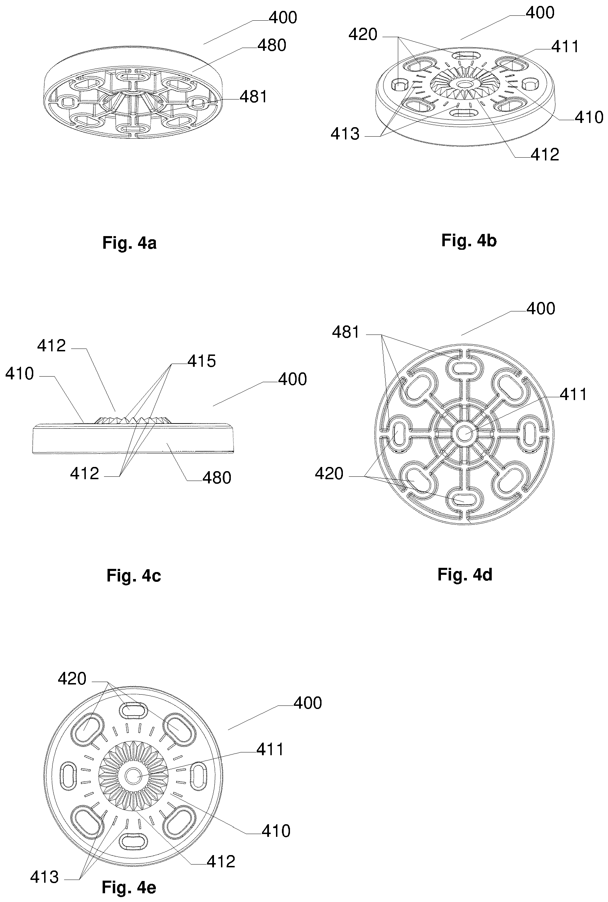

The foot module **400** is adapted for fixing to the floor or walls. It is shown in Fig. 4a-e. The foot module **400** has a body **480** in the shape of a disk, which at the top has a contact pad **410** with a hole **411**, and a surrounding retaining surface **412** complementary with the retaining surfaces **112, 122, 132** of the node module **100**. Mounting to the floor or walls is done by screwing the module on through the holes **420** provided in its body **480**. In this example embodiment, the body has an openwork structure, with ribbing **481** which reinforces the holes and is executed radially and circumferentially. It is also possible to utilize a solid body. The contact pad **412** provides a protractor scale **413**. The retaining surface in this example embodiment has 24 teeth. During tests, good performance was achieved using from 6 to 360 teeth, and even typical friction surfaces, however, the best performance was provided by teeth ranging from 24 to 72. The teeth **415** are fitted to notches between the teeth **215** of the retaining surface **212**.

The set of connected elements (without the connecting bolts shown) is presented in Fig. 5. The foot module **400** is mounted to the floor. The foot module **400** is used to attach the node module **100**, which prior to fastening may be rotated as shown by the arrow in Fig. 5. Attached to the node module **100** is the intermediary module **200**, which is used to connect the terminal module **300**. The intermediary module **200** can be rotated in relation to the node module **100** in the horizontal plane, while the terminal module **300** can be rotated in relation to the intermediary module **200** in the vertical plane. Such an set ensures the possibility of erecting structures with a broad spectrum of shapes.

For simple skeletal structures a sufficient set encompasses at least three elongated structural elements **600**, three terminal modules **300,** three intermediary modules **200**, and a node module **100.**

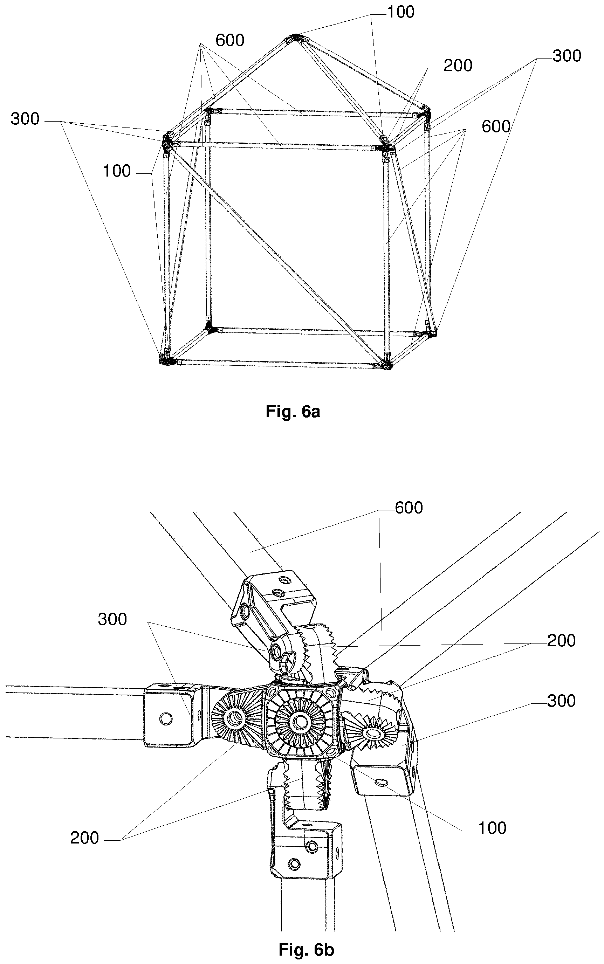

Fig. 6a shows a simple skeletal structure of a gazebo made from 17 elongated structural elements **600** arranged in the shape of a hexagon with diagonal struts in three walls, covered by a pyramidal canopy. Due to the connection of base edges using structural elements, it is not necessary to use the foot module **400** to mount the structure to the floor.

Fig. 6b shows a magnified view of one of the corners utilizing one node module **100**, which is used to connect five intermediary modules **200**, which are connected to elongated structural elements via the terminal modules **300**. These structural elements constitute three edges of a cube, as well as a strut and one of the canopy edges.

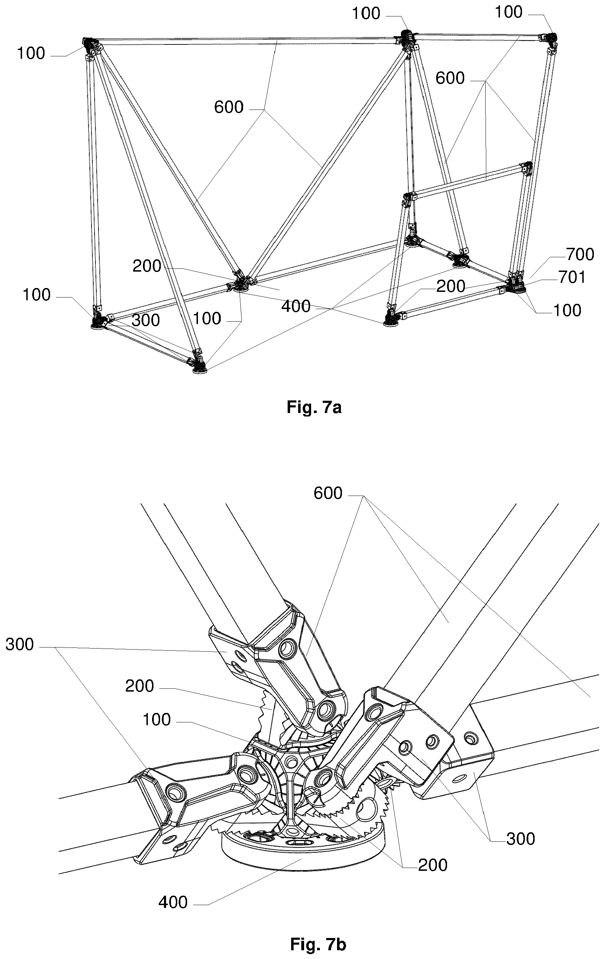

Fig. 7a shows the structure of an exhibition booth with an open base. The booth is fixed to the floor at seven points using the foot modules **400**. Each foot module is connected to a node module **100** which, via an intermediary modules **200** and terminal modules **300**, connects to elongated structural elements **600.** In the right corner **700**, the structure uses a combination of two node modules directly, using a bolt threaded on both sides, screwed into the central holes of the connecting contact pads. Additionally, a fiat bar **701** is fastened to the side, through which bolts are screwed into the central holes of parallel surfaces of node modules **100.**

Fig. 7b shows a magnified view of one of the corners which uses a node module **100** fixed to the floor via a foot module **400**, which connects four intermediary module **200,** to which elongated structural elements are connected using terminal modules **300** rotated in accordance with the construction design.

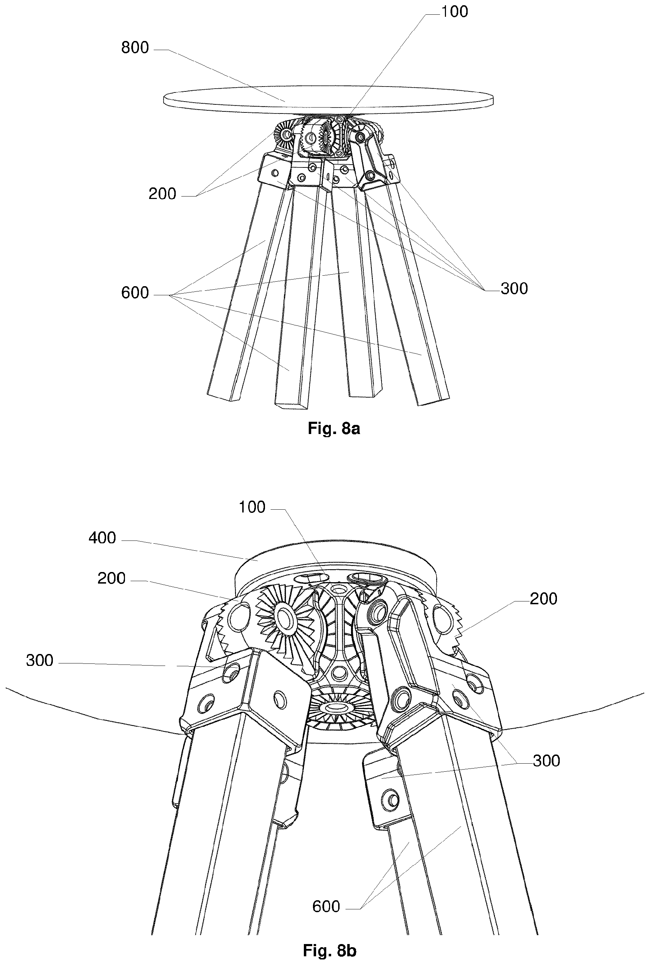

Fig. 8a shows a table erected according to the invention. The table has a countertop **800** which is attached to a node module **100**, which is further, via intermediary modules **200** and terminal modules **300,** connected to four elongated structural elements which comprise the table's legs. As can be seen in the magnification of Fig. 8b, the node module is attached to the countertop 800 using the foot module **400**.

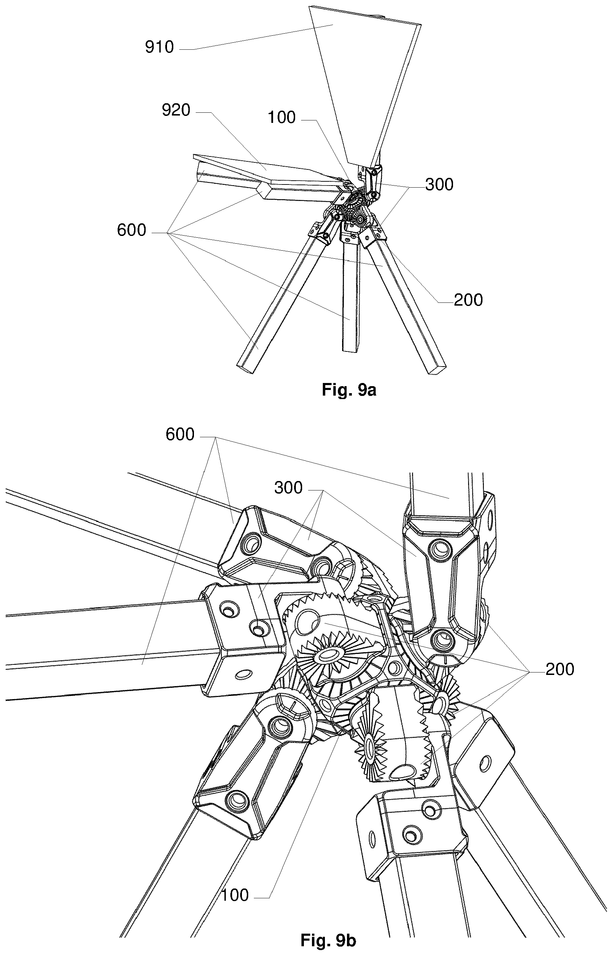

Another structure according to the invention is a chair shown in Fig. 9a. Equipped with a backrest 910 and a seat **920**, it is attached to five elongated structural elements **600** equipped with terminal modules **300** connected using intermediary modules **200** to the node module **100**. This connection is shown magnified in Fig. 9b.

Example structures described above are aimed to illustrate the invention's capabilities, and its assurance of design freedom and flexibility. The execution of such structures using solutions found in the state of the art would be tedious and troublesome. It should be emphasized, that these structures only serve to illustrate the invention, and in no way determine its limits.

The modules according to the invention can be delivered in sets comprising at least one node module, intermediary modules, and terminal modules. Additional benefits can be achieved by expanding the set by a foot module, or other additional modules.

According to the invention, in alternative embodiments the screwed bolt connection of the contact pads of individual modules is replaced by a clamp or flat-bar connection.

Modules according to the invention can be made of various materials known in the state of the art, in particular, durable plastics, potentially with metal threaded elements. It was especially preferable to execute entire modules from aluminum with an addition of steel or titanium inserts which ensure threaded sections of holes. This is especially important due to the fact, that available node module often come in the form of aluminum profiles.

It is clear that after reading this description, a person skilled in the art will be able to propose numerous alternative retaining surfaces, toothed or not, and connecting with one another in different ways known in the state of the art. It is also easy to propose alternative structures of node modules executed on the plan of different polyhedrons, and different methods of providing bolt or clamp connections between the modules. It is clear, however, that all modifications of this type are within the scope protection defined by enclosed patent claims.

## Claims

1. A node module (**100**) for joining elongated structural elements (**600**), equipped with a body having at least four contact pads (**110**, **120**, **130**, **140**, **150**) for connecting with the elongated structural elements (**600**), **characterized in that** the body has the shape of a block, while the at least four contact pads (**110**, **120**, **130**, **140**, **150**) have retaining surfaces (**112**, **122**, **132**) with at least partially threaded holes (**111**, **121**, **131**, **141**, **151**), and at least two contact pads (**110**, **120**, **130**) are substantially perpendicular to one another.

2. A node module according to claim 1, **characterized in that** the body has an substantially cuboid shape, and the contact pads (**110**, **120**, **130**, **140**, **150**) are placed on its walls.

3. A node module according to claim 1 or 2, **characterized in that** the retaining surface (**112**, **122**, **132**) of at least one contact pad (**110**, **120**, **130**) is provided with teeth diverging radially from the hole (**111**, **121**, **131**).

4. A node module according to claim 3, **characterized in that** on the retaining surface (**112**, **122**, **132**) of at least one contact pad (**110**, **120**, **130**) there are at least 18 teeth.

5. A node module according to claim 4, **characterized in that** the retaining surface (**112**, **122**, **132**) of at least one contact pad (**110**, **120**, **130**, **140**, **150**) there are at least 72 teeth.

6. A node module according to claim 2, **characterized in that** at least one corner of the substantially cuboidal body has a corner hole (**171**, **172**, **173**, **174**) with an part having an internal thread.

7. A node module according to any of the claims from 1 to 6, **characterized in that** at least one hole (**111**) of the contact pad (**110**) has a section (**111a**) having internal thread.

8. A node module according to any of the claims from 1 to 7 **characterized in that** the contact pad is provided with a protractor scale (**113**).

9. An intermediary module (**200**) for joining structural elements with the node module (**100**) equipped with at least a first contact pad (**210**) having a retaining surface (**212**) with a hole (**211**) and a second contact pad (**220**) having a retaining surface (**222**) with a hole (**221**), **characterized in that** it further has a third contact pad (**230**) having a retaining surface (**232**) with a hole (**231**), whereby the second (**220**) and third (**230**) contact pad are substantially parallel to one another, so that the holes (**221**, **231**) of the second and third contact pad (**220**, **230**) are substantially coaxial, while the retaining surfaces (**222**, **232)** of the second and third contact pad (**220**, **230**) are oriented in opposite directions, and the first contact pad **(210)** is substantially perpendicular to the second (**220**) and third (**230**) contact pad and has a retaining surface **(212)** oriented towards the second and third retaining surface, while the hole (**211**) of the first retaining surface **(210)** runs between the second and third retaining surface, through the entire intermediary module (**200**).

10. A set for erecting structures of elongated elements, **characterized in that** it has at least one node module (**100**) as specified in any of the claims from 1 to 8, at least two intermediary modules (**200**), as specified in claim 9, with a first contact pad **(210)** complementary with the contact pad (**110**, **120**, **130**, **140**, **150**) of the node module (**100**) and at least three terminal modules (**300**) adapted for fastening on elongated structural elements (**600**), and equipped with a contact pad (**310**) complementary with the second and third contact pad (**220**, **230**) of the intermediary module (**200**).

11. A set according to claim 10, **characterized in that** it further contains a foot module (**400**) adapted for fixing to flat surfaces and having a contact pad (**410**) complementary with the contact pad (**110**, **120**, **130**, **140**, **150**) of the node module (**100**).

12. A frame structure of at least three elongated structural elements (**600**), **characterized in that** at least three elongated structural elements (**600**) at least on one end have terminal modules (**300**) connected to intermediary modules (**200**), as specified in claim 9, whereby at least two intermediary modules (**200**) are connected with at least one node module (**100**), as specified in claims from 1 to 8.

13. A frame structure as specified in claim 12 **characterized in that** it further has a foot module (**400**) which supports the node module (**100**).

14. A method for erecting frame structures comprised of elongated structural elements (**600**), where the elongated structural elements are provided with terminal elements having contact pads, which is connectable to a node module, **characterized in that** the node module (**100**) constitutes a node module as specified in claims from 1 to 8, while the connection of the terminal module **(300)** and node module **(100)** is carried out using an intermediary module (**200**), as specified in claim 9, having a first contact pad (**210**) complementary with the contact pads (**110**, **120**, **130**) of the node module **(100)** and a second and third node module complementary with the node module of the terminal module **(300)** .
